# EUROPEAN PATENT APPLICATION

(11) **EP 1 927 739 A1**
(43) Date of publication of application: **04.06.2008**
(21) Application number: 06125191.4
(22) Date of filing: 01.12.2006
(51) Int. Cl.: F02B 37/013

(54) **Method and device for controlling a turbocharging system**

(71) Applicant: Ford Global Technologies, LLC, Dearborn, MI 48126 (US)
(72) Inventor: Petrovic, Simon, 6227TV, Maastricht (NL)
(74) Representative: Drömer, Hans-Carsten

(57) **Abstract**

The invention relates to a method and a device for controlling a turbo-charging system, said turbo-charging system to be coupled to an internal combustion engine (110, 210) and comprising a first turbo-charging unit having a first compressor stage (140, 240) and a second turbo-charging unit having a second compressor stage (150, 250). The method comprises the steps of receiving a boost pressure demand of said internal combustion engine (110, 210), determining, based upon said boost pressure demand and depending on the current operating state of said internal combustion engine (110, 210), a first desired value of a first partial pressure ratio (Π_{HP}) between the pressure values immediately downstream and upstream of the first compressor stage (140, 240), and a second desired value of a second partial pressure ratio (Π_{LP}) between the pressure values immediately downstream and upstream of the second compressor stage (150, 250), and controlling the first and second partial pressure ratios (Π_{HP}, Π_{LP}) according to the first and second desired value.

## Description

A turbo-charging system or boosting system is used in diesel engines, but also in gasoline engines or any other type of internal combustion engines, in order to use energy from the combustion process by converting exhaust enthalpy into a torque and transmitting said torque to a compressor which compresses the incoming clean air on its way to the intake manifold.

In addition to single-stage turbo-charging systems, also two-stage turbo-charging systems or compound charging devices have been developed. In these systems, two turbochargers are used in order to consider the increasing requirements regarding torque and power with a lower fuel consumption.

US 5,408,979 discloses a method and device for turbo-charging regulation in an internal combustion engine. The device comprises a first turbo unit associated with a first valve, a second turbo unit associated with a second valve and a central control unit to control the actuation of the first and second valves in response to signals from a rotational speed sensor and at least one pressure sensor in order to provide a continuous transition between the operation of the first turbo unit and the second turbo unit. The first turbo unit is smaller than the second turbo unit, and the central control unit utilizes only the first turbo unit at a comparatively lower combustion gas flow, while it utilizes the second turbo unit at a comparatively high combustion gas flow. Furthermore, a fuel quality indicator is used for calculating the value of the charging pressure on the basis of the actual fuel composition at each instant.

WO 2005/024201 A1 also discloses a turbo-charging system comprising a high pressure turbocharger and a low pressure turbocharger with respective first and second operational ranges, wherein a PID control scheme is applied for achieving a smooth transition from one turbocharger to the other.

A common drawback of the afore mentioned control devices is the existing risk for each turbo-charging stage to enter the so-called surge area, where pressure and flow are unstable due to a reverse flow caused by an increased counter pressure, which affects the smoothness of the boost performance and the driveability of the vehicle.

It is therefore an object of the present invention to provide a method and a device for controlling a turbo-charging system which make it possible to ensure a smooth boost performance and a good driveability of the vehicle.

This object is achieved according to the method as defined in the independent claim 1, as well as the device as defined in the independent claim 8.

A method for controlling a turbo-charging system, said turbo-charging system to be coupled to an internal combustion engine and comprising a first turbo-charging unit having a first compressor stage and a second turbo-charging unit having a second compressor, comprises the steps of:
- receiving a boost pressure demand of said internal combustion engine;
- determining, based upon said boost pressure demand and depending on the current operating state of said internal combustion engine, a first desired value of a first partial pressure ratio between the pressure values immediately downstream and upstream of the first compressor stage, and a second desired value of a second partial pressure ratio between the pressure values immediately downstream and upstream of the second compressor stage; and
- controlling the first and second partial pressure ratios according to the first and second desired value.

Due the consideration of the pressure ratios across each of the two compressor stages of the compound boosting system depending on the current operating state of the engine in the controlling of the turbo-charging system, it can be guaranteed that none of the compressor stages enters the surge region, so that a smooth boost performance and a good driveability of the vehicle can be achieved.

According to a preferred embodiment, at least one of said first and second turbo-charging units comprises a variable geometry turbocharger (VGT), which, on the one hand, provides via the vane position as an additional design parameter an additional degree of freedom and enables to control the counter pressure and to increase the operating range of the turbo charger. Furthermore, the variable geometry turbocharger can be used as an actuator for controlling the partial pressure ratio of respective turbo-charging stage.

Further features and advantages of the present invention can be gathered from the dependent claims.

The invention is explained in the following according to preferred embodiments illustrated in the accompanying drawings, wherein:
- Figure 1: shows a diagram which illustrates a serial sequential configuration of a two-stage turbo-charging system used in a first embodiment of the present invention;
- Figure 2: shows a diagram which illustrates a parallel sequential configuration of a two-stage turbo-charging system which is used according to a second embodiment of the present invention;
- Figure 3: illustrates a state machine according to a preferred embodiment of the method of the present invention;
- Figure 4: shows a diagram which illustrates the controller structure used in the device according to the present invention; and
- Figure 5: illustrates a diagram showing the controller-actuator-assignment according to a preferred embodiment of the present invention.

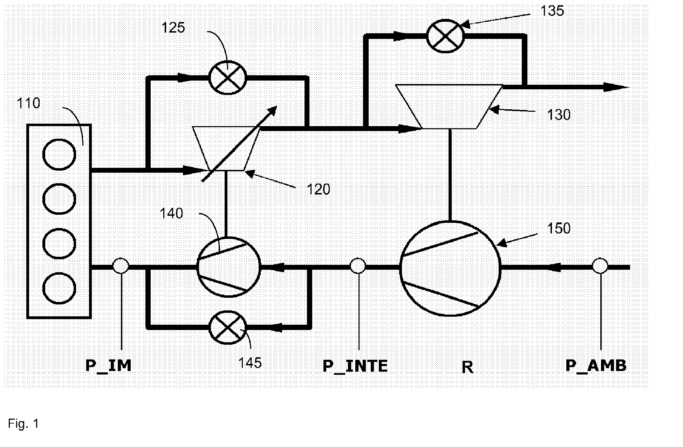

Fig. 1 illustrates a turbo-charging system according to a first embodiment of the present invention. This system comprises a first turbo-charging unit having a variable geometry turbocharger (= VGT) 120 arranged at the exhaust side of said unit and a first compressor stage 140 on the intake air side of said unit. The system further comprises, in a serial configuration with the first turbo-charging unit, a second turbo-charging unit having a fixed geometry turbocharger (= FGT) 130 on the exhaust side of said unit as well as a second compressor stage 150 on the intake air side of said unit. Bypass valves 125, 135 and 145, respectively, are arranged in respective secondary branches attributed to the VGT 120, the FGT 130 and the first compressor stage 140, respectively.

The pressure between the first compressor stage 140 and the engine 110 (i.e. the pressure immediately downstream of the first compressor stage 140) is named as Pᵢₘ, the pressure between the first compressor stage 140 and the second compressor stage 150 is named as Pᵢₙₜₑᵣ, and the pressure immediately upstream of the second compressor stage 150 is named as P_{amb}. P_{amb} may be measured using an ambient pressure sensor being a standard feature in passenger cars or trucks. The pressure Pᵢₙₜₑᵣ between the first compressor stage 140 and the second compressor stage 150 can either be estimated by using a speed sensor in the first turbo-charging unit or by using an inter-stage pressure sensor.

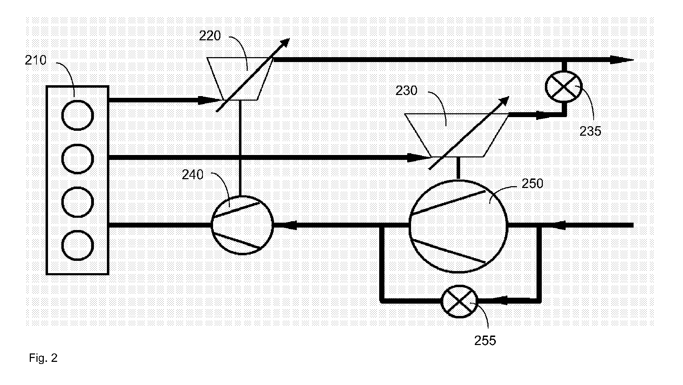

Fig. 2 illustrates a turbo-charging system according to a second embodiment of the present invention. This system also comprises a first turbo-charging unit having a first variable geometry turbocharger (= VGT) 220 arranged at the exhaust side of said unit and a first compressor stage 240 on the intake air side of said unit. The system further comprises, in a parallel configuration with the first turbo-charging unit, a second turbo-charging unit having a second variable geometry turbocharger (= FGT) 230 on the exhaust side of said unit as well as a second compressor stage 250 on the intake air side of said unit. A bypass valve 235 is arranged immediately upstream of the second variable geometry turbocharger 230. A further bypass valve 255 is arranged in a secondary branch attributed to the second compressor stage 250.

In the embodiments of Fig. 1 and Fig. 2, variable geometry or fixed geometry turbochargers may alternatively used. Further, different air path modifiers such as a passive intake air bypass throttle or intercoolers may be alternatively used. Although the engine 110 or 210, respectively, in the embodiments of Fig. 1 and Fig. 2 is a diesel engine, the invention is of course not limited thereto and any other type of internal combustion engines such as gasoline engines equipped with a compound boosting system may be used as well in connection with the inventive method and device.

In the following, the inventive method of controlling a turbo-charging system is explained with reference to the embodiment of Fig. 1. At the beginning, the turbo-charging system receives an incoming boost pressure demand of the internal combustion engine 110. This boost pressure demand corresponds to the ideal intake manifold boost pressure being attained according to the standard procedure and based on a compromise between exhaust emissions, power and/or torque and fuel consumption.

In the next step, a corresponding pressure ratio between the pressure Pᵢₘ downstream of the first compressor stage 140 and the pressure P_{amb} upstream of the second compressor stage 150 is determined such that it corresponds to the required boost pressure.

This pressure ratio, which is named here and in the following Π, can be achieved by different combinations of the respective pressure ratios which are obtained across the respective single compressor stages 140 or 150, respectively. Accordingly, in the next step, it is determined what is the "best" pressure ratio for each of the compressor stages 140 and 150 such that the aforementioned resulting pressure ratio Π is obtained. The pressure ratio across the first compressor stage 140 (in the following also referred to as first partial pressure) is referred to in the following as Π_{HP}, whereas the pressure ratio across the second compressor stage 150 (in the following also referred to as second partial pressure) is referred to as Π_{LP}.

The selection of the first and second partial pressure Π_{HP} and Π_{LP} is performed, according to the preferred embodiment, by taking the desired pressure ratios (also referred to in the following as "desired partial pressure ratios") from corresponding look-up tables which include desired values for said partial pressure ratios attributed to values for at least one engine parameter, e.g. the engine speed.

With the so determined desired values, the partial pressure ratios Π_{HP} and Π_{LP,} and thereby the resulting pressure Π across both compressor stages 140 and 150, are controlled according to the obtained desired values in a standard PID control scheme (PID = Proportional plus Floating plus Derivative).

Furthermore, according to a preferred embodiment, the controlling of the partial pressure ratios Π_{HP} and Π_{LP} is performed by actuators which are used in dependence on the respective operation regime of the engine.

An example for a suitable definition of operation regimes is given in the following Table 1, which gives suitable actuators for each of three operating regimes (low speed for N ≤ 2000 rpm, mid speed for 2000 rpm ≤ N ≤ 3000 rpm and high speed for N ≥ 3000 rpm). Preferably, the respective speed ranges may be calibrated.

**Table 1:**

| Operating Regime | Π_{LP} | Π_{HP} | Actuators Used |
|---|---|---|---|
| N ≤ 2000 rpm | 1 | Π | HP VGT |
| 2000 rpm ≤ N ≤ 3000 rpm | >1 | >1 | HP Turbine Bypass (and HPC Bypass if continuous) |
| N ≥ 3000 rpm | >>1 | 1 | LP Wastegate |

### 1. Low speed regime (N ≤ 2000 rpm)

The desired boost pressure is controlled using the first, high pressure variable geometry turbocharger (HP VGT) 120, whose setpoint can either be carried over from an ECU calibration or recalibrated. The bypass valve 145 (= high pressure compressor bypass or HPC bypass) and the bypass valve 125 (= high pressure turbine bypass or HPT bypass) remained fully closed ("FC"), since this optimises the enthalpy delivered to the HP turbo-charging stage. The LP wastegate remains fully closed ("FC") since there is no overboost.

### 2. Mid speed regime (2000 rpm ≤ N ≤ 3000 rpm)

At about 2000 rpm, high pressure variable geometry turbocharger (HP VGT) 120 cannot effectively control the boost pressure, so it is set to a default fully open ("FO") position. The main control actuator for obtaining the requested boost pressure is the bypass valve 125 (= HPT bypass), but in cases where the bypass valve 145 (= HPC bypass) is continuous (i.e. continuously variable), this bypass valve can be used to provide a further control degree of freedom. The LP wastegate remains fully closed ("FC") since there is no overboost.

### 3. High speed regime (N ≥ 3000 rpm)

For speeds greater than about 3000 rpm, the flow across the HP compressor 140, depending on its size, will be choked and it is desirable to open fully the bypass valve 145 (= HPC bypass) in order not to restrict the flow of incoming air. The bypass valve 125 (= HPT bypass) is fully open, and the second turbocharger stage (= LP stage) controls the requested boost pressure. If there is overboost, then the LP wastegate will open accordingly to ensure the correct boost pressure is achieved.

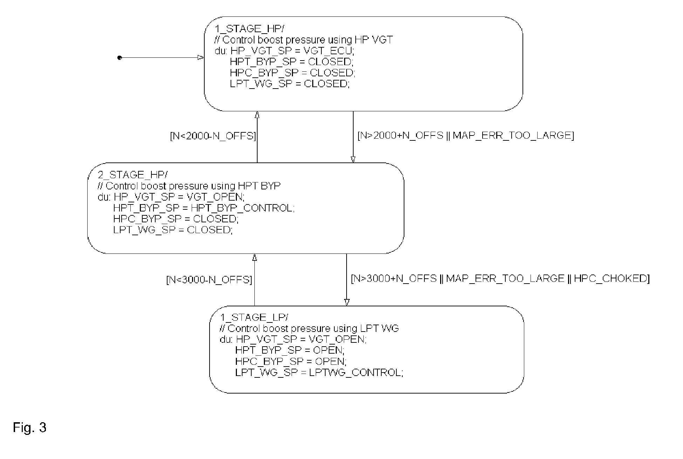

The transitions between the above operation regimes are also illustrated in Fig. 3 showing a state machine according the preferred embodiment of the method of the present invention. Furthermore, the state transition matrix is given in the following Table 2:

**Table 2:**

| States | 1_STAGE_HP | 2_STAGE_HP | 1_STAGE_LP |
|---|---|---|---|
| 1_STAGE_HP (use HP stage only) | N/A | MAP error too large OR N too high | N/A |
| 2_STAGE_HP (use HP and LP stages) | N too low | N/A | MAP error too large OR N too high OR MAF choked |
| 1_STAGE_LP (use LP stage only) | N/A | N too low | N/A |

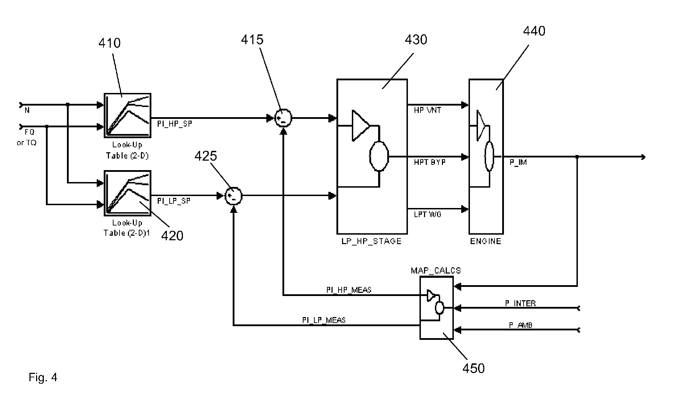

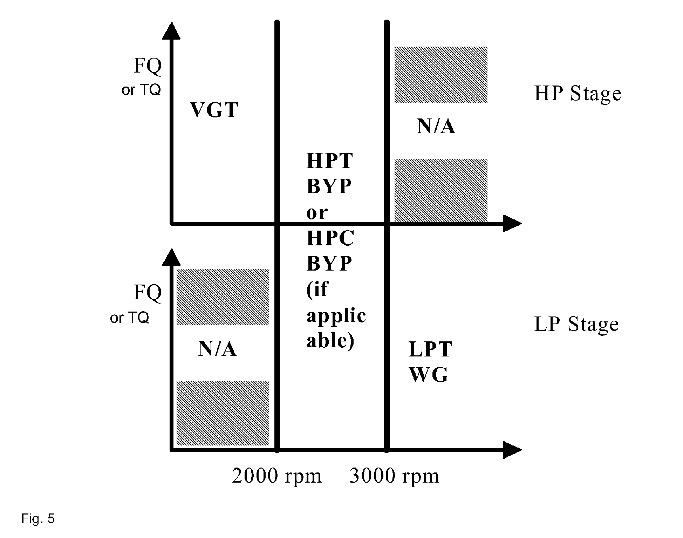

Fig. 4 illustrates the controller structure used in the preferred embodiment of the present invention. In dependence of the current engine speed N and the fuelling, desired values of the partial pressure ratios Π_{HP} and Π_{LP} are taken from the look-up tables 410 and 420. These desired values are fed into subtraction units 415 or 425, respectively, where they are subtracted from measured values of these partial pressure ratios Π_{HP} and Π_{LP} (calculated from the measured values of Pinter and P_AMB in a calculation stage 450, so that the turbo-charging system 430 and the internal combustion engine 440 is controlled according to this difference via the respective actuators (i.e. the high pressure variable geometry turbocharger 120, the high pressure turbine bypass 125 or the LP wastegate). Fig. 5 illustrates the controller-actuator-assignment according to the preferred embodiment of the present invention by listing the used actuators depending on the fuelling (FQ) and the engine speed.

It is to be noted that the inventive control method assumes that the feedforward, mapped pressure ratios and therefore actuator positions are very accurate, and that any engine-to-engine, component-to-component or sensor variation will be compensated with actuator feedback on the desired pressure ratio error. Of course, this functionality depends on the sensor/actuator set and their specifications, including durability, response time and accuracy.

## Claims

1. A method for controlling a turbo-charging system, said turbo-charging system to be coupled to an internal combustion engine (110, 210) and comprising a first turbo-charging unit having a first compressor stage (140, 240) and a second turbo-charging unit having a second compressor stage (150, 250), wherein said method comprises the steps of:
a) receiving a boost pressure demand of said internal combustion engine (110, 210);
b) determining, based upon said boost pressure demand and depending on the current operating state of said internal combustion engine (110, 210), a first desired value of a first partial pressure ratio (Π_{HP}) between the pressure values immediately downstream and upstream of the first compressor stage (140, 240), and a second desired value of a second partial pressure ratio (Π_{LP}) between the pressure values immediately downstream and upstream of the second compressor stage (150, 250); and
c) controlling the first and second partial pressure ratios (Π_{HP}, Π_{LP}) according to the first and second desired value.

2. The method according to claim 1,
**characterized in that**
said step c) of controlling the first and second partial pressure ratio (Π_{HP} Π_{LP}) according to the first and second desired value is performed using at least one actuator, wherein said actuator is selected from a group of actuators depending on a current operating regime of said internal combustion engine (110, 210).

3. The method according to claim 1 or 2,
**characterized in that**
said step b) is performed by taking said first and second desired value for said first and second partial pressure ratios (Π_{HP} Π_{LP}) from at least one look-up table which includes desired values for said partial pressure ratios attributed to values of at least one parameter being characteristic for the current operating regime of said internal combustion engine (110, 210).

4. The method according to anyone of the claims 1 to 3,
**characterized in that**
the current operating state of said internal combustion engine (110, 210) is **characterized by** the engine speed and/or the fuelling of said internal combustion engine (110, 210).

5. The method according to anyone of the preceding claims,
**characterized in that**
at least one of said first and second turbo-charging units comprises a variable geometry turbocharger.

6. The method according to anyone of the preceding claims,
**characterized in that**
the first turbo-charging unit is a high pressure stage being designed for lower engine flows, and the second turbo-charging unit is a low pressure stage being designed for larger engine flows.

7. The method according to anyone of the preceding claims,
**characterized in that**
said step of selecting said actuator from a group of actuators depending on a current operating regime of said internal combustion engine (110, 210) comprises the steps of:
using as actuator, in a low speed regime, a variable geometry turbocharger in the first turbo-charging unit;
using as actuator, in a mid speed regime, at least one bypass valve attributed to the first turbo-charging unit; and
using as actuator, in a high speed regime, a wastegate in the second turbo-charging unit.

8. A device for controlling a turbo-charging system,
**characterized in that**
said device is designed to perform a method according to anyone of the preceding claims.
